# EUROPÄISCHE PATENTSCHRIFT

(11) **EP 2 035 730 B1**
(45) Veröffentlichungstag und Bekanntmachung des Hinweises auf die Patenterteilung: **05.05.2010**
(21) Anmeldenummer: 07764792.3
(22) Anmeldetag: 22.06.2007
(51) Int. Cl.: F16H 63/30

(54) **SCHALTVORRICHTUNG FÜR GESCHWINDIGKEITS-WECHSELGETRIEBE IN KRAFTFAHRZEUGEN**
SHIFT DEVICE FOR A VARIABLE SPEED TRANSMISSION IN MOTOR VEHICLES
DISPOSITIF DE CHANGEMENT DE VITESSES POUR BOITE DE VITESSES DE VEHICULES AUTOMOBILES

(30) Priorität: 23.06.2006 DE 102006028784
(43) Veröffentlichungstag der Anmeldung: 18.03.2009
(73) Patentinhaber: AUDI AG, 85045 Ingolstadt (DE)
(72) Erfinder: MEIXNER, Christian, 85049 Ingolstadt (DE); SCHENKER, Mario, 85049 Ingolstadt (DE); MÄRKL, Johann, 85049 Ingolstadt (DE)
(74) Vertreter: Lehle, Josef
(86) Internationale Anmeldenummer: PCT/EP2007/005523
(87) Internationale Veröffentlichungsnummer: WO 2007/147616

(56) Entgegenhaltungen:
- WO-A-2005/064281
- DE-A1- 10 158 729
- DE-A1- 19 742 312
- DE-U1-202004 013 699

## Beschreibung

Die Erfindung betrifft eine Schaltvorrichtung für Geschwindigkeits-Wechselgetriebe in Kraftfahrzeugen.

Allgemein ist es bekannt, bei Schaltvorrichtungen mit Schaltstangen in Blechkonstruktion auf die Enden der Schaltstangen Kunststoffbüchsen zu deren Lagerung in entsprechenden Querwänden des Getriebegehäuses aufzuspritzen (vgl. DE 196 01 623 C2). Die Schaltstangen können dabei bei automatisierten Wechselgetrieben mit elektrohydraulisch gesteuerten Gangstelleinheiten über entsprechende Anschlussmittel direkt mit den Gangstelleinheiten verbunden sein (z. B. DE 103 42 389 A1).

Die WO 2005/064281 A1 wird als nächstliegender Stand der Technik angesehen. Dieses Dokument zeigt eine Schaltsrange für ein Geschwindigheits-Wechselgetriebe, die in einem Getriebegehäuse untergebracht ist. Die Schaltstange hat an einem Endbereich einen zylindrischen Abschnitt, mit den die Schaltstange in dem Getreibegehäuse dichtend gelagert ist.

Aufgabe der Erfindung ist es, eine herstellungstechnisch günstige und für automatisierte Wechselgetriebe besonders geeignete Schaltvorrichtung der gattungsgemäßen Art vorzuschlagen.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass die Schaltstange einenends eine ölraumtrennende Querwand des Wechselgetriebes durchdringt und mittels einer auf die Schaltstange aufgespritzten Kunststoffbüchse in der korrespondierenden Durchgangsbohrung der Querwand des Wechselgetriebes geführt und abgedichtet ist.

Erfindungsgemäß weist die Kunststoffbüchse eine radial äußere, umlaufende Ringnut auf, in die ein mit der Durchgangsbohrung zusammenwirkender Dichtring eingesetzt ist. Somit können in vorteilhafter Weise den unterschiedlichen Konstruktionsanforderungen gerecht werdende Materialien für die Kunststoffbüchse (Verarbeitbarkeit, Verschleißbeständigkeit, Gleiteigenschaften) und den Dichtring (insbesondere Dichteigenschaften) verwendet werden.

Der Dichtring weist eine in beiden Verschieberichtungen abdichtende Konfiguration auf, insbesondere wenn an den besagten Ölraum des Wechselgetriebes bzw. die ölraumtrennende Querwand ein weiterer Ölraum z. B. für Nasskupplungen, hydraulische Steuerungen, etc. anschließt.

Dabei kann der Dichtring am äußeren Umfang zwei in beide Verschieberichtungen wirkende, umlaufende Dichtvorsprünge aufweisen, die neben relativ geringen Verschiebekräften eine zuverlässige Abdichtung gewährleisten.

In vorteilhafter Weiterbildung der Erfindung kann die Schaltstange im Querschnitt betrachtet z. B. rechteckförmig ausgeführt sein, so dass der Dichtring bezüglich seines Außenumfanges auf einfache Weise rotationssymmetrisch ausgeführt werden kann.

Des weiteren kann die Schaltstange außerhalb der ölraumtrennenden Querwand des Getriebegehäuses liegende Funktionsmittel tragen, wobei die Durchgangsbohrung in der Querwand und die Kunststoffbüchse der Schaltstange im Durchmesser so groß ausgelegt sind, dass die Funktionsmittel durch die Durchgangsbohrung hindurch mit der Schaltstange als Montageeinheit montierbar sind.

Insbesondere können die Funktionsmittel an der Schaltstange befestigte Positionsgeber und/oder mit einer Gangstelleinheit verbindbare Anschlussmittel sein, die in einem Vormontageschritt mit der Schaltstange lösbar oder unlösbar verbunden und anschließend als Montageeinheit durch die Durchgangsbohrung hindurch in das Getriebegehäuse einbaubar sind.

Bei einem automatisierten Geschwindigkeits-Wechselgetriebe mit 5 oder 6 Vorwärtsgängen und einem Rückwärtsgang können z. B. drei Schaltstangen für die Vorwärtsgänge und eine Schaltstange für den Rückwärtsgang durch die ölraumtrennende Querwand in entsprechenden Durchgangsbohrungen hindurchgeführt sein.

Schließlich kann zumindest in eine der Durchgangsbohrungen der ölraumtrennenden Querwand - bevorzugt in alle Durchgangsbohrungen - eine Lagerbüchse aus Stahl eingesetzt sein, mittels der die Dauerhaltbarkeit der Schaltstangenlagerungen und -abdichtung erhöht werden kann.

Ein Ausführungsbeispiel der Erfindung ist im folgenden mit weiteren Einzelheiten näher erläutert. Die schematische Zeichnung zeigt in:
- Fig. 1: eine schematische Ansicht eines Antriebsaggregates für Kraftfahrzeuge mit automatisiertem Geschwindigkeits-Wechselgetriebe, mit einer eine ölraumtrennende Querwand durchdringenden Schaltstange;
- Fig. 2: eine Schnittansicht der teilweise dargestellten, ölraumtrennenden Querwand und der Schaltstange des Wechselgetriebes gemäß Fig. 1;
- Fig. 3: eine Schnittansicht gemäß Linie III - III der Fig. 2 durch die ölraumtrennende Querwand und die Schaltstange; und
- Fig. 4: einen Querschnitt durch den Dichtring der Kunststoffbüchse der Schaltstange in vergrößerter Darstellung.

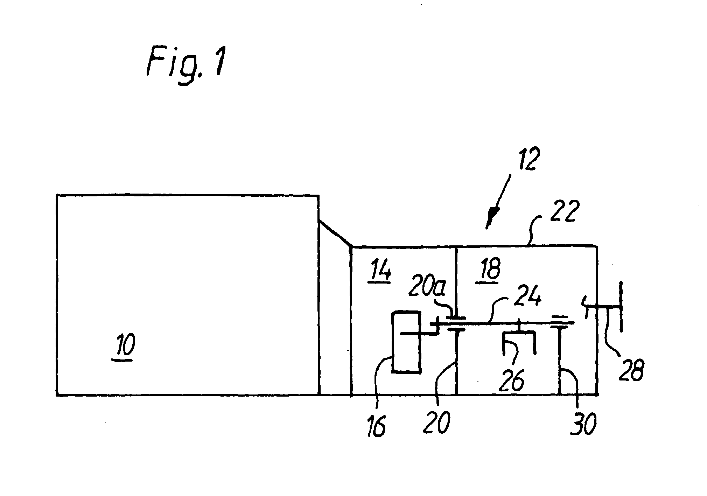

Die Fig. 1 zeigt als Übersichtsskizze ein Antriebsaggregat für Kraftfahrzeuge mit einer Brennkraftmaschine 10 und einem nachgeschalteten Geschwindigkeits-Wechselgetriebe 12. Die Aggregate 10, 12 können soweit nicht beschrieben bekannter Bauart sein.

In dem als automatisiertes Schaltgetriebe ausgeführten Wechselgetriebe 12 sind in einem ersten Getrieberaum 14 nicht näher beschriebene Kupplungseinrichtungen (z. B. eine hydraulisch betätigte Doppelkupplung) und elektrohydraulische Steuerungseinrichtungen bzw. Gangstelleinheiten 16 angeordnet.

In dem zweiten Getrieberaum 18, der durch eine ölraumtrennende Querwand 20 des Gehäuses 22 des Wechselgetriebes 12 abgeteilt ist, sind in nicht ersichtlicher Weise die Getriebewellen, die zur Bildung der Übersetzungsstufen erforderlichen Zahnradsätze, Synchronkupplungen etc. positioniert.

Ferner sind im Wechselgetriebe 12 Schaltstangen 24 (es ist nur eine Schaltstange 24 dargestellt) verschiebbar gelagert, die in bekannter Weise Schaltgabeln 26 tragen und mit den Synchronkupplungen des Wechselgetriebes 12 in bekannter Weise zur Schaltung von Übersetzungsstufen zusammenwirken. Die Schaltstangen 24 sind innerhalb des Getrieberaumes 14 mit den Gangstelleinheiten 16 verbunden und können somit aus einer Neutralstellung heraus in beide Verschieberichtungen verschoben werden.

Der Abtrieb zu den angetriebenen Rädern des Kraftfahrzeuges kann über eine Ausgangswelle 28 des Wechselgetriebes 12 und/oder über ein nicht dargestelltes, vorderes Differenzial erfolgen.

Die Schaltstangen 24 sind in Durchgangsbohrungen 20a der ölraumtrennenden Querwand 20 und anderenends in einer (oder mehreren) Querwand 30 des Gehäuses 22 des Wechselgetriebes 12 axial verschiebbar gelagert.

In den Getrieberäumen 14, 18 kann unterschiedliches Getriebe- oder Hydrauliköl eingefüllt sein, so dass an den durchgeführten Getriebewellen und Schaltstangen 24 entsprechende Lagerungen und Abdichtungen vorgesehen sind.

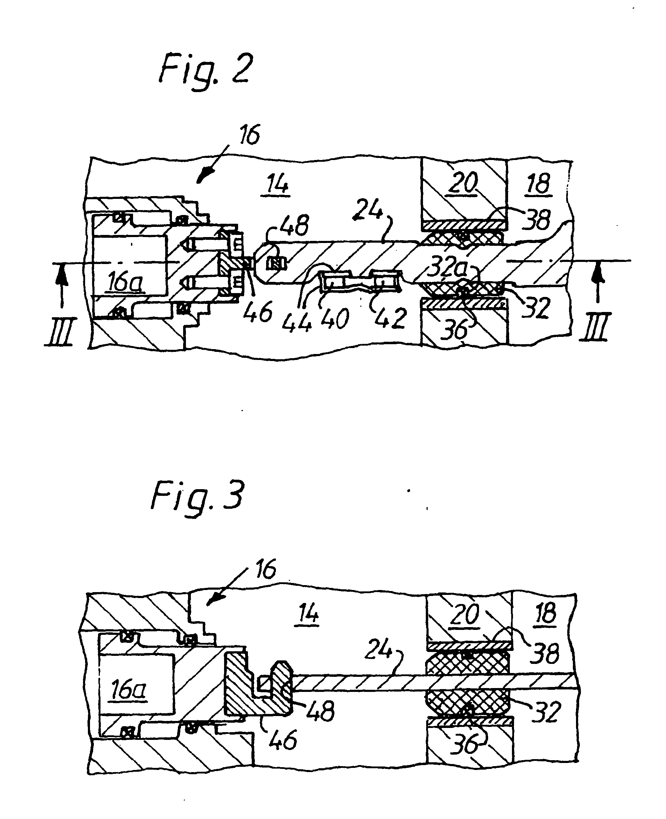

Dazu ist gemäß den Fig. 2 und 3 im Bereich der ölraumtrennenden Querwand 20 die Schaltstange 24 mit einer Kunststoffbüchse 32 umspritzt, die somit mit ihrem rotationssymmetrischen Außenumfang eine Lagerung für die durch die Querwand 20 hindurchgeführte Schaltstange 24 bildet. Die zweite Lagerung (vgl. Fig. 1) der Schaltstange 24 in der Querwand 30 kann in nicht näher dargestellter Weise eine die Schaltstange 24 unverdrehbar führende Wälzlagerung sein.

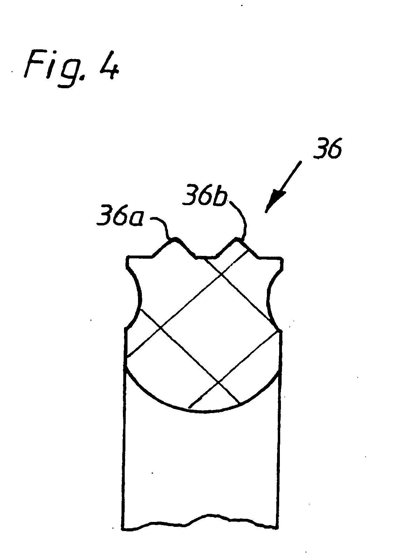

Die Kunststoffbüchse 32 weist an ihrem Außenumfang und in ihrer senkrechten Mittelebene liegend eine Außennut 32a auf, in die ein elastischer Dichtring 36 (vgl. Fig. 4) eingesetzt ist. Der Dichtring 36 weist zur zuverlässigen Abdichtung in beiden Verschieberichtungen der Schaltstange 24 zwei ringförmig umlaufende, im wesentlichen nur eine Linienberührung herstellende Dichtvorsprünge 36a, 36b auf.

Ferner ist in die Durchgangsbohrung 20a eine Lagerbüchse 38 aus Stahl eingesetzt, die mit dem Dichtring 36 bzw. dem Außenumfang der Kunststoffbüchse 32 entsprechend zusammenwirkt.

Die Schaltstange 24 trägt an ihrem in den Getrieberaum 14 ragenden Bereich - wie insbesondere die Fig. 2 zeigt - zwei durch Permanentmagnete gebildete Positionsgeber 40, 42, die mittels eines Polbleches 44 mit der Schaltgabel 24 fest verbunden sind und als Funktionsmittel einer an sich bekannten Auswerteschaltung zur Gangerkennung dienen, z. B. in Verbindung mit benachbart angeordneten Reedschaltern oder elektrischen Messspulen als Positionssensoren.

Des weiteren ist die Schaltgabel 24 über Anschlussmittel 46, 48 (vgl. Fig. 3) mit der Gangstelleinheit 16 bzw. mit deren Stellkolben 16a trieblich verbunden. Die Anschlussmittel können wie dargestellt ein hakenförmiges Verbindungsteil 46 am Stellkolben 16a und eine in die Schaltgabel 24 eingearbeitete, durchgehende Ausnehmung 48 sein, wobei das Verbindungsteil 46 bei der Montage der Gangstelleinheit 16 quer zur Verschieberichtung der Schaltstange 24 in die Ausnehmung 48 eingeschoben wird. Die Anschlussmittel 46, 48 können aber auch anderweitig ausgeführt sein, z. B. mit einem Anschlussflansch an der Schaltstange 24.

Die lichte Weite der Durchgangsbohrung 20a bzw. der Lagerbüchse 38 ist nun so groß ausgelegt, dass die Schaltstange 24 mit den vormontierten Positionsgebern 40, 42 und gegebenenfalls angeordneten Anschlussmitteln (Ausnehmung 48, Flansch, etc.) durch die Durchgangsbohrung 20a bzw. die Lagerbüchse 38 der ölraumtrennenden Querwand 20 hindurch einführbar und im Getrieberaum 18 des Wechselgetriebes 12 montierbar ist.

## Patentansprüche

1. Schaltvorrichtung für Geschwindigkeits-Wechselgetriebe (12) in Kraftfahrzeugen, mit zumindest einer in einem Getriebegehäuse (22) in Querwänden (20,30) verschiebbar gelagerten Schaltstange (24), mittels der Übersetzungsstufen im Getriebegehäuse (22) schaltbar sind, wobei die Schaltstange (24) einenends eine ölraumtrennende Querwand (20) des Wechselgetriebes (12) durchdringt und mittels einer auf die Schaltstange (24) aufgespritzten Kunststoffbüchse (32) in der korrespondierenden Durchgangsbohrung (20a, 38) der Querwand (20) des Wechselgetriebes (12) geführt und abgedichtet ist, und die Kunststoffbüchse (32) eine radial äußere, umlaufende Ringnut (32a) aufweist, in die ein mit der Durchgangsbohrung (20a, 38) zusammenwirkender Dichtring (36) eingesetzt ist, und der Dichtring (36) eine in beide Verschieberichtungen abdichtende Konfiguration aufweist.

2. Schaltvorrichtung nach Anspruch 1, **dadurch gekennzeichnet, dass** der Dichtring (36) am äußeren Umfang zwei in beide Verschieberichtungen wirkende, umlaufende Dichtvorsprünge (36a, 36b) aufweist.

3. Schaltvorrichtung nach einem der vorhergehenden Ansprüche, **dadurch gekennzeichnet, dass** die Schaltstange (24) im Querschnitt betrachtet vorzugsweise rechteckförmig und die Kunststoffbüchse (32) bezüglich ihres Außenumfanges rotationssymmetrisch ausgeführt ist.

4. Schaltvorrichtung nach einem der vorhergehenden Ansprüche, **dadurch gekennzeichnet, dass** die Schaltstange (24) außerhalb der ölraumtrennenden Querwand (20) des Getriebegehäuses (22) liegende Funktionsmittel (40, 42, 44, 48) trägt und dass die Durchgangsbohrung (20a, 38) in der Querwand (20) und die Kunststoffbüchse (32) der Schaltstange (24) im Durchmesser so groß ausgelegt sind, dass die Funktionsmittel (40, 42, 44, 48) durch die Durchgangsbohrung (20a, 38) hindurch mit der Schaltstange (24) als Montageeinheit montierbar sind.

5. Schaltvorrichtung nach Anspruch 4, **dadurch gekennzeichnet, dass** die Funktionsmittel an der Schaltstange (24) befestigte Positionsgeber (40, 42) und/oder mit einer Gangstelleinheit (16) verbindbare Anschlussmittel (46, 48) sind.

6. Schaltvorrichtung nach einem der vorhergehenden Ansprüche, **dadurch gekennzeichnet, dass** mehrere Schaltstangen für Vorwärtsgänge und für wenigstens einen Rückwärtsgang des Wechselgetriebes (12) durch die ölraumtrennende Querwand (20) in entsprechenden Durchgangsbohrungen (20a, 38) hindurchgeführt sind.

7. Schaltvorrichtung nach einem der vorhergehenden Ansprüche, **dadurch gekennzeichnet, dass** in zumindest eine der Durchgangsbohrungen (20a) der Querwand (20) eine Lagerbüchse (38) aus Stahl, vorzugsweise Edelstahl, oder aus Leichtmetall, vorzugsweise Aluminium, einsetzbar ist.

## Claims

1. Selector apparatus for variable-speed gearboxes (12) in motor vehicles, having at least one selector rod (24) which is mounted displaceably in a gearbox housing (22) in transverse walls (20, 30) and by means of which transmission stages in the gearbox housing (22) can be selected, the selector rod (24) penetrating, at one end, a transverse wall (20) of the variable-speed gearbox (12), which transverse wall (20) divides an oil chamber, and being guided and sealed in the corresponding through hole (20a, 38) of the transverse wall (20) of the variable-speed gearbox (12) by means of a plastic bush (32) which is moulded onto the selector rod (24), and the plastic bush (32) having a radially outer, circumferential annular groove (32a), into which a sealing ring (36) is inserted which interacts with the through hole (20a, 38), and the sealing ring (36) having a configuration which seals in both displacement directions.

2. Selector apparatus according to Claim 1,
**characterized in that** the sealing ring (36) has, on its outer circumference, two circumferential sealing projections (36a, 36b) which act in both displacement directions.

3. Selector apparatus according to one of the preceding claims, **characterized in that**, as viewed in cross section, the selector rod (24) is preferably of rectangular configuration and the plastic bush (32) is configured such that it is rotationally symmetrical with regard to its external circumference.

4. Selector apparatus according to one of the preceding claims, **characterized in that** the selector rod (24) carries functional means (40, 42, 44, 48) which lie outside the transverse wall (20) of the gearbox housing (22), which transverse wall (20) divides an oil chamber, and **in that** the diameters of the through hole (20a, 38) in the transverse wall (20) and of the plastic bush (32) of the selector rod (24) are designed to be so large that the functional means (40, 42, 44, 48) can be mounted through the through hole (20a, 38) with the selector rod (24) as one assembly unit.

5. Selector apparatus according to Claim 4,
**characterized in that** the functional means are position generators (40, 42) which are fastened to the selector rod (24) and/or connecting means (46, 48) which can be connected to a gear selector unit (16).

6. Selector apparatus according to one of the preceding claims, **characterized in that** a plurality of selector rods for forward gears and for at least one reverse gear of the variable-speed gearbox (12) are guided through the transverse wall (20) which divides an oil chamber, in corresponding through holes (20a, 38).

7. Selector apparatus according to one of the preceding claims, **characterized in that** a bearing bush (38) made from steel, preferably stainless steel, or from a lightweight metal, preferably aluminium, can be inserted into at least one of the through holes (20a) of the transverse wall (20).

## Revendications

1. Dispositif de changement de vitesse pour boîte de vitesses (12) dans des véhicules automobiles, comprenant au moins une tige de changement de vitesse (24) montée de manière déplaçable dans un carter de boîte de vitesses (22) dans des parois transversales (20, 30), au moyen de laquelle des rapports de transmission peuvent être passés dans le carter de boîte de vitesses (22), la tige de changement de vitesse (24) traversant, à une extrémité, une paroi transversale (20) séparant l'espace d'huile de la boîte de vitesses (12) et étant guidée et étanchée au moyen d'une douille en plastique (32) pulvérisée sur la tige de changement de vitesse (24), dans l'alésage de passage correspondant (20a, 38) de la paroi transversale (20) de la boîte de vitesses (12), et la douille en plastique (32) présentant une rainure annulaire (32a) périphérique radialement extérieure, dans laquelle est insérée une bague d'étanchéité (36) coopérant avec l'alésage de passage (20a, 38), et la bague d'étanchéité (36) présentant une configuration réalisant l'étanchéité dans les deux directions de déplacement.

2. Dispositif de changement de vitesse selon la revendication 1, **caractérisé en ce que** la bague d'étanchéité (36) présente, sur la périphérie extérieure, deux saillies d'étanchéité (36a, 36b) périphériques, agissant dans les deux directions de déplacement.

3. Dispositif de changement de vitesse selon l'une quelconque des revendications précédentes, **caractérisé en ce que** la tige de changement de vitesse (24), vue en coupe transversale, est réalisée de préférence sous forme rectangulaire et la douille en plastique (32) est réalisée avec une symétrie de révolution par rapport à sa périphérie extérieure.

4. Dispositif de changement de vitesse selon l'une quelconque des revendications précédentes, **caractérisé en ce que** la tige de changement de vitesse (24) porte des moyens fonctionnels (40, 42, 44, 48) situés à l'extérieur de la paroi transversale (20) séparant l'espace d'huile du carter de boîte de vitesses (22), et **en ce que** l'alésage de passage (20a, 38) dans la paroi transversale (20), et la douille en plastique (32) de la tige de changement de vitesse (24), ont un diamètre tel que les moyens fonctionnels (40, 42, 44, 48) puissent être montés à travers l'alésage de passage (20a, 38) avec la tige de changement de vitesse (24) en tant qu'unité de montage.

5. Dispositif de changement de vitesse selon la revendication 4, **caractérisé en ce que** les moyens fonctionnels sont des capteurs de position (40, 42) fixés sur la tige de changement de vitesse (24) et/ou des moyens de raccordement (46, 48) pouvant être connectés à une unité de sélection de vitesse (16).

6. Dispositif de changement de vitesse selon l'une quelconque des revendications précédentes, **caractérisé en ce que** plusieurs tiges de changement de vitesse pour des vitesses de marche avant et pour au moins une vitesse de marche arrière de la boîte de vitesses (12) sont guidées à travers la paroi transversale (20) séparant l'espace d'huile dans des alésages de passage correspondants (20a, 38).

7. Dispositif de changement de vitesse selon l'une quelconque des revendications précédentes, **caractérisé en ce que** dans au moins l'un des alésages de passage (20a) de la paroi transversale (20) peut être insérée une douille de palier (38) en acier, de préférence en acier noble, ou en métal léger, de préférence en aluminium.
